# EUROPEAN PATENT APPLICATION

(11) **EP 1 167 293 A1**
(43) Date of publication of application: **02.01.2002**
(21) Application number: 01113583.7
(22) Date of filing: 13.06.2001
(51) Int. Cl.: C01B 31/04

(54) **Graphite sheet coated with insulating material and coating method thereof**

(30) Priority: 23.06.2000 JP 2000188930; 23.06.2000 JP 2000188931
(71) Applicant: MATSUSHITA ELECTRIC INDUSTRIAL CO., LTD., Kadoma-shi, Osaka 571-8501 (JP)
(72) Inventor: Taomoto, Akira, Yokohama-shi, Kanagawa 227-0054 (JP); Akami, Kenji, Atsugi-shi, Kanagawa 243-0032 (JP); Kudo, Yasuo, Yokohama-shi, Kanagawa 225-0021 (JP); Takeoka, Hiroki, Osaka-shi, Osaka 532-0022 (JP); Saito, Toshiharu, Kawanishi-shi, Hyogo 666-0142 (JP); Tsuchiya, Souji, Tsukui-gun, Kanagawa 220-0112 (JP)
(74) Representative: Balsters, Robert

(57) **Abstract**

Through the formation of an organic polymer film on the surface of a bare graphite sheet by electrodeposition or through the application of a resin film to the surface thereof, a good-quality coated graphite sheet of uniform thickness which has excellent electric insulation and a low thermal resistance and prevents graphite powder from separating while retaining thermal conductivity and flexibility of the bare graphite sheet can be provided. The organic polymer film is formed by electrodeposition from a resin selected from the group consisting of an anionic electrodeposition resin, a cationic electrodeposition resin, a thermosetting electrodeposition resin and a UV curing electrodeposition resin or is formed of polyimide. The resin film is applied by a method selected from the group consisting of dipping, spin coating, screen printing, brushing and spraying, using at least one resin selected from the group consisting of an epoxy resin, a polyimide resin and a fluororesin.

## Description

### FIELD OF THE INVENTION

The present invention relates to a graphite sheet coated with insulating material and a coating method thereof.

### BACKGROUND OF THE INVENTION

A sheet made by mixing graphite powder with a binder resin and a sheet made by roll pressing expanded graphite are known as graphite sheets. Japanese Examined Patent Publication No. 1-49642 (1989) discloses a method of immediately obtaining a flexible graphite sheet through heat and rolling treatments of a polyimide film, which is a raw material. These graphite sheets exhibit excellent electric conductivity and thermal conductivity. The graphite sheet made by the heat and rolling treatments of the polyimide film, in particular, is known for its high quality, resistance to bending, richness of flexibility and excellent thermal conductivity.

Recently, with the advance of miniaturization of electronic equipment and enhancement of performance of the equipment, a problem for a highly integrated CPU and semiconductor manufacturing equipment, which requires fine control, of giving off heat is becoming so critical as to require study, and it is essential that a measure against this heat problem focus not only on how to dissipate heat but also on how to reduce place-to-place variation in temperature.

As the heat-radiation measure, a metal plate with excellent thermal conductivity such as an aluminum plate or a copper plate is appropriately machined and put in place, or it is used in combination with a cooling fan. However, such a metal plate is electrically conductive, thus problematically causing components to short-circuit in small-size electronic equipment. There are also problems of machinability and weight, depending on the material used.

Under these circumstances, the graphite sheets are beginning to receive attention for use as heat sink materials in various kinds of devices and equipment including electronic equipment and the others because compared with the metal plate, they feature good thermal conductivity and flexibility and are lightweight.

However, the graphite sheets have electric conductivity, so that they can possibly cause electronic parts to short-circuit when used as thermal conduction materials inside the electronic equipment. Moreover, the graphite sheets wear out, thus producing carbon powder that can adversely cause a short circuit. Furthermore, there are cases where the graphite sheets are deficient in mechanical strength such as rupture strength, tensile strength or the like, depending on how they are used.

To preclude these inconveniences, the application of a polymer film to the surface of the graphite sheet is proposed. However, the polymer film has a low thermal conductivity, so that thermal resistance increases with increase in polymer film thickness when the graphite sheet is used with its surface in contact with a heat source or a heatsink. For this reason, it is preferable that as thin a polymer film as possible is used. However, with a thickness equal to or less than 20 *µ* m, the polymer film becomes wrinkled or difficult to apply uniformly, requiring hard handling. The film further requires an adhesive layer which also has a low thermal conductivity, a cause of thermal resistance.

Consequently, the realization of a graphite sheet, the surface of which exhibits excellent insulation, is chemically stable, prevents the separation of carbon powder therefrom and has a reduced thermal resistance, is awaited.

### SUMMARY OF THE INVENTION

The present invention aims to provide a graphite sheet, the graphite sheet retaining its excellent electric conductivity, thermal conductivity and flexibility and having a surface which exhibits excellent insulation, is chemically stable, prevents the separation of carbon powder therefrom and has a reduced thermal resistance.

According to the present invention, an organic polymer film is provided on the surface of a graphite sheet by electrodeposition. Through the formation of the organic polymer film by electrodeposition, the polymer film can be of uniform thickness and is unlikely to form pinholes.

Usable examples of the organic polymer film include an electrodeposited film of anionic electrodeposition resin, an electrodeposited film of cationic electrodeposition resin, an electrodeposited film of thermosetting electrodeposition resin, an electrodeposited film of UV curing electrodeposition resin, a polyimide film and the like.

According to the present invention, instead of the organic polymer film, a resin film is provided on the surface of the graphite sheet. Usable examples of the resin film include a film of epoxy resin, a film of polyimide resin, a film of fluororesin and the like, and a laminated film of two or more of these resins is also usable. Examples of a coating method include dipping, spin coating, screen printing, brushing, spraying and the like.

A graphite sheet used in the present invention is preferably a pyrolytic graphite sheet made by heat and rolling treatments of a polyimide film, which is a raw material. This graphite sheet exhibits excellent thermal conductivity and flexibility and lends itself to higher performance. Through the formation of an organic polymer film by electrodeposition or a resin film on the surface of this graphite sheet, a chemically stable graphite sheet which has excellent insulation and is free of the separation of graphite powder is achieved.

### DESCRIPTION OF THE PREFERRED EMBODIMENTS

Examples of the present invention are demonstrated hereinafter in detail.

### Example 1

A 75- *µ* m-thick polyimide film (marketed under the trade name of KAPTON by E.I. du Pont de Nemours and Company) was used as a polyimide film, a starting material for a graphite sheet. This polyimide film underwent a preliminary heat treatment where it was heated in an electric furnace to a maximum temperature of 1200°C in a nitrogen gas atmosphere and then cooled to room temperature and was removed from the furnace. Thereafter, the film underwent a high temperature heat treatment where it was heated in a high temperature electric furnace to a maximum temperature of 2700°C in an Ar gas atmosphere and then cooled to room temperature. The thus heated polyimide film was roll pressed into a graphite sheet approximately 100 *µ* m thick. The thus made graphite sheet had such flexibility as to withstand repeated bending.

The above-described condition for making the graphite sheet is a typical example. The condition for making a graphite sheet is not limited to this, provided that graphitization is ensured, and provided that the obtained graphite sheet has such flexibility as to withstand repeated bending. Specifically, a preferable condition for making a graphite sheet includes a preliminary treatment where a polyimide film is heated in inert gas at a temperature in the range of 1000°C to 1600°C and a subsequent treatment where the polyimide film is heated from room temperature to a temperature equal to or greater than 2500°C.

The graphite sheet obtained was cut into a 2cm by 5cm piece which underwent ultrasonic cleaning in acetone. Subsequently, the graphite sheet underwent electrodeposition twice. Each electrodeposition was carried out for 2 minutes at 30 V, using cationic UV curing electrodeposition resin (marketed under the trade name of ELECOAT UC-2000 by Shimizu, Co., Ltd.) and a carbon plate as a counter electrode at a distance of 30 mm from graphite sheet electrode. Thereafter, the graphite sheet coated with an electrodeposited film underwent cleaning and was then exposed to ultraviolet rays which cured the electrodeposited film. The surface of the graphite sheet which underwent the electrodepositions was homogeneous when observed by the naked eye, and the electrodeposited film had a thickness of 6 *µ* m. The film also retained its insulation at up to 60 V when subjected to an evaluation using counter electrode of copper which was vapor deposited on the surface side of the graphite sheet coated with the electrodeposited film.

The graphite sheet thus coated with the electrodeposited film (hereinafter referred to as "ED coated graphite sheet") retained flexibility similar to that of a bare graphite sheet not coated with an electrodeposited film, and no separation of graphite powder was observed. Besides, damages such as exfoliation, cracks and the others were not found at all when the ED coated graphite sheet was bent 100 times in the direction of each side.

For the evaluation of thermal conductivity of the ED coated graphite sheet, the bare graphite sheet and the ED coated graphite sheet were each sandwiched between a heat source and a heat sink, and a temperature difference between the heat source and the heat sink was measured in each case. Specifically, the 2 cm by 1.5 cm bare graphite sheet and the 2 cm by 1.5 cm ED coated graphite sheet coated with the 6- *µ* m-thick electrodeposited film were each sandwiched between the 2 cm by 1.5 cm heat source and the heat sink and were secured by screws, each of which measured 3 mm in screw hole diameter and was torqued to 1 MPa. Thereafter, the heat source was supplied with 4 W of power to generate heat, and the temperature difference between the heat source and the heat sink was measured in each case when a steady state was reached.

As a result of the measurement, in the case of the bare graphite sheet, the temperature difference between the heat source and the heat sink was 4.8°C, while in the case of the ED coated graphite sheet, the temperature difference was 5.8°C, an increase of 1.0°C over the bare graphite sheet. This increase results from a decrease in thermal conductivity that was caused by the electrodeposited film on the graphite sheet but is minuscule, so that a property of the ED coated graphite sheet as a heat sink material is substantially indistinguishable from that of the bare graphite sheet. As mentioned earlier, the surface of the electrodeposited film has insulation, so that a short circuit is unlikely to occur.

As described above, the ED coated graphite sheet in accordance with the present example can implement improvement in mechanical strength, prevention of the separation of graphite powder and insulation of its surface while retaining thermal conductivity and flexibility that are inherent in a graphite sheet.

It should be noted that in cases where the ED coated graphite sheet in accordance with the present example requires machining such as cutting, trimming, drilling or the like so as to be mounted in electronic equipment, it is simply handled in the same manner that the bare graphite sheet is machined.

### Example 2

A graphite sheet obtained in the same manner as in Example 1 underwent electrodeposition twice. Each electrodeposition was carried out for 1.5 minutes at 60 V, using anionic thermosetting electrodeposition resin (marketed under the trade name of AE-4X by Shimizu, Co., Ltd.), a carbon plate as a counter electrode at a distance of 30 mm from the graphite sheet electrode. Subsequently, the graphite sheet coated with an electrodeposited film underwent cleaning and then underwent preliminary heating at 100°C followed by heat curing at 180°C. The surface of the thus made ED coated graphite sheet was homogeneous when observed by the naked eye, and the electrodeposited film had a thickness of 8 *µ* m. The film also retained its insulation at up to 30 V when subjected to an evaluation using copper as an electrode vapor deposited on each side of the graphite sheet coated with the electrodeposited film.

The ED coated graphite sheet in accordance with the present example retained flexibility similar to that of a bare graphite sheet, and no separation of graphite powder was observed. Besides, damages such as exfoliation, cracks and the others were not found at all when the ED coated graphite sheet was bent 100 times in the direction of each side.

For the evaluation of thermal conductivity of the ED coated graphite sheet, the bare graphite sheet and the ED coated graphite sheet were each sandwiched between a heat source and a heat sink, and a temperature difference between the heat source and the heat sink was measured in each case in the same manner as in Example 1. As a result, in the case of the bare graphite sheet, the temperature difference between the heat source and the heat sink was 4.8°C, while in the case of the ED coated graphite sheet, the temperature difference was 6.2°C, an increase of 1.4°C over the bare graphite sheet. This increase is minuscule, so that a property of the ED coated graphite sheet as a heat transfer material is substantially indistinguishable from that of the bare graphite sheet. As mentioned earlier, the surface of the electrodeposited film has insulation, so that a short circuit is unlikely to occur.

### Example 3

A polyimide electrodeposited film was formed on a graphite sheet obtained in the same manner as in Example 1. Specifically, polyamic acid obtained through the reaction of biphenyl tetracarboxylic dianhydride and p-phenylene diamine in N-methylpyrrolidone under nitrogen reflux was diluted with N,N-dimethylamide and further added to triethylamine, thus forming a solution of polyamic acid salt. Subsequently, methanol was added to this solution, and the resultant solution was eventually adjusted so as to contain 0.15% polyamic acid, thus forming an electrodeposition solution.

Thereafter, the graphite sheet was immersed in this solution and underwent electrodeposition which was carried out for 3 minutes at 30 V, using a carbon plate as a counter electrode at a distance of 30 mm from the other electrode. Subsequently, the resultant graphite sheet underwent heating for 1 hour at 250°C for polyimidization of the polyamic acid. The electrodeposition and heating were carried out two more times for the formation of the polyimide electrodeposited film.

The surface of the graphite sheet thus coated with the polyimide electrodeposited film (hereinafter referred to as "polyimide coated graphite sheet) was homogeneous when observed by the naked eye, and the polyimide electrodeposited film had a thickness of 10 *µ* m.

The polyimide coated graphite sheet retained flexibility similar to that of a bare graphite sheet, its surface had insulation, and no separation of graphite powder was observed. Besides, damages such as exfoliation, cracks and the others were not found at all when the polyimide coated graphite sheet was bent 100 times in the direction of each side.

For the evaluation of thermal conductivity of the polyimide coated graphite sheet, the bare graphite sheet and the polyimide coated graphite sheet were each sandwiched between a heat source and a heat sink, and a temperature difference between the heat source and the heat sink was measured in each case in the same manner as in Example 1. As a result, in the case of the bare graphite sheet, the temperature difference between the heat source and the heat sink was 4.8°C, while in the case of the polyimide coated graphite sheet, the temperature difference was 6.5°C, an increase of 1.7°C over the bare graphite sheet. This increase is minuscule, so that a property of the polyimide coated graphite sheet as a heat transfer material is substantially indistinguishable from that of the bare graphite sheet. Moreover, the polyimide exhibits excellent insulation, so that a short circuit is unlikely to occur.

### Example 4

A graphite sheet was made in the same manner as in Example 1 except that a polyimide film underwent a preliminary heat treatment where it was heated at a heating rate of 5°C/min to a maximum temperature of 1600°C in nitrogen.

The film heated was a 200- *µ* m-thick foamy graphite sheet which had no flexibility and was rigid and brittle. This graphite sheet underwent rolling, and the resultant graphite sheet had such flexibility as to withstand repeated bending and a thickness of about 100 *µ* m.

Graphite sheets made in the manner described above were respectively coated with electrodeposited films respectively formed in the same manners as in Examples 1-3, and all of these graphite sheets exhibited satisfactory properties similar to those in Examples 1-3.

Graphite sheets which were made in the same manner as described above except that the maximum temperature for the preliminary heat treatment was set at 1400°C and were respectively coated with electrodeposited films respectively formed in the same manners as in Examples 1-3 underwent the same tests as in Examples 1-3 and showed the similar results.

The foregoing examples have referred to the cationic UV curing electrodeposition resin, the anionic thermosetting electrodeposition resin and the polyamic acid salt, respectively. However, other electrodeposition materials can also be used, provided that the formation of organic polymer films by electrodeposition is feasible.

In each of the foregoing examples, with an organic polymer film exceeding 10 *µ* m in thickness, the organic polymer film causes increased thermal resistance, thus impairing thermal conductivity of a graphite sheet, and flexibility of the sheet also decreases. It is therefore preferable that an organic polymer film formed by electrodeposition is as thin as 10 *µ* m or less.

As described above, through the formation of an organic polymer film on the surface of a bare graphite sheet by electrodeposition, there can be obtained a good-quality coated graphite sheet (i.e., an ED coated graphite sheet or a polyimide coated graphite sheet) which has excellent electric insulation, excellent flexibility and a low thermal resistance and prevents the separation of graphite powder without impairing excellent thermal conductivity of the bare graphite sheet.

Moreover, adhesion between the coating film formed by electrodeposition and the graphite sheet is satisfactory, so that the use of an adhesive or the like is unnecessary; this facilitates the work.

### Example 5

Epoxy resin (a two liquid epoxy resin consisting of a main agent and a curing agent that are marketed under the respective trade names of 2022 and 2104 by Three Bond Co., Ltd.) was applied to opposite sides of a graphite sheet made in the same manner as in Example 1 by brushing. Thereafter, the graphite sheet coated with the epoxy resin underwent curing for 1 hour at 100°C. The epoxy resin film on the graphite sheet had a thickness of 8 *µ* m, its surface had insulation, and no separation of graphite powder was observed.

For the evaluation of thermal conductivity of the graphite sheet thus coated with the resin (hereinafter referred to as "resin coated graphite sheet"), a bare graphite sheet and the resin coated graphite sheet were each sandwiched between a heat source and a heat sink, and a temperature difference between the heat source and the heat sink was measured in each case in the same manner as in Example 1.

Specifically, the 2 cm by 1.5 cm bare graphite sheet and the 2 cm by 1.5 cm resin coated graphite sheet, each side of which was formed with the 8- *µ* m-thick epoxy resin film, were each sandwiched between the 2 cm by 1.5 cm heat source and the heat sink and were secured by screws, each of which measured 3 mm in screw hole diameter and was torqued to 1 MPa. Thereafter, the heat source was supplied with 4 W of power to generate heat, and the temperature difference between the heat source and the heat sink was measured in each case when a steady state was reached.

As a result of the measurement, in the case of the bare graphite sheet, the temperature difference between the heat source and the heat sink was 4.8°C, while in the case of the resin coated graphite sheet, the temperature difference was 5.8°C, a minuscule increase of 1.0°C over the bare graphite sheet. Accordingly, a property of the resin coated graphite sheet as a heat transfer material is substantially indistinguishable from that of the bare graphite sheet.

The resin coated graphite sheet also retained flexibility similar to that of the bare graphite sheet. Besides, damages such as exfoliation, cracks and the others were not found at all when the resin coated graphite sheet was bent 100 times in the direction of each side.

Consequently, the resin coated graphite sheet (each side of which is formed with the epoxy resin film) of Example 5 can, similarly to the respective ED coated graphite sheets of Examples 1-4, implement improvement in mechanical strength, prevention of the separation of graphite powder and insulation of its surface while retaining thermal conductivity and flexibility that are inherent in a graphite sheet.

It should be noted that in cases where the resin coated graphite sheet in accordance with the present example requires machining such as cutting, trimming, drilling or the like so as to be mounted in electronic equipment, it is simply handled in the same manner that the bare graphite sheet is machined.

### Example 6

Epoxy resin (a two liquid epoxy resin consisting of a main agent and a curing agent that are marketed under the respective trade names of 2022 and 2104 by Three Bond Co., Ltd.) was diluted with methyl ethyl ketone in a ratio of 1:2 and was applied to opposite sides of a graphite sheet obtained in the same manner as in Example 1 by dipping, and subsequently, the graphite sheet coated with the diluted epoxy resin underwent curing for 1 hour at 100°C. The epoxy resin film thus formed on the graphite sheet had a thickness of 6 *µ* m, its surface exhibited insulation, and no separation of graphite powder was observed.

For the evaluation of thermal conductivity of the thus made resin coated graphite sheet, a bare graphite sheet and the resin coated graphite sheet were each sandwiched between a heat source and a heat sink, and a temperature difference between the heat source and the heat sink was measured in each case in the same manner as in Example 5. As a result, in the case of the bare graphite sheet, the temperature difference between the heat source and the heat sink was 4.8°C, while in the case of the resin coated graphite sheet, the temperature difference was 5.6°C, a minuscule increase of 0.8°C over the bare graphite sheet. Accordingly, a property of the resin coated graphite sheet as a heat transfer material is substantially indistinguishable from that of the bare graphite sheet.

### Example 7

Epoxy resin (a two liquid epoxy resin consisting of a main agent and a curing agent that are marketed under the respective trade names of 2022 and 2104 by Three Bond Co., Ltd.) was diluted with methyl ethyl ketone in a ratio of 1:3 and was applied to opposite sides of a graphite sheet obtained in the same manner as in Example 1 by spin coating, and subsequently, the graphite sheet coated with the diluted epoxy resin underwent curing for 1 hour at 100°C. The epoxy resin film thus formed on the graphite sheet had a thickness of 5 *µ* m, its surface exhibited insulation, and no separation of graphite powder was observed.

For the evaluation of thermal conductivity of the thus made resin coated graphite sheet, a bare graphite sheet and the resin coated graphite sheet were each sandwiched between a heat source and a heat sink, and a temperature difference between the heat source and the heat sink was measured in each case in the same manner as in Example 5.

As a result of the measurement, in the case of the bare graphite sheet, the temperature difference between the heat source and the heat sink was 4.8°C, while in the case of the resin coated graphite sheet, the temperature difference was 5.3°C, a minuscule increase of 0.5°C over the bare graphite sheet. Accordingly, a property of the resin coated graphite sheet as a heat transfer material is substantially indistinguishable from that of the bare graphite sheet.

### Example 8

Polyimide varnish (marketed under the trade name of TORAYNEESE #3000 by Toray Industries, Inc.) was diluted with diethyl acetamide in a ratio of 1:3 and was applied to opposite sides of a graphite sheet obtained in the same manner as in Example 1 by dipping, and subsequently, the graphite sheet coated with the diluted polyimide varnish underwent a heat treatment at 120°C, 220°C and 300°C for 10 minutes, 10 minutes and 30 minutes, respectively. The polyimide resin film thus formed on the graphite sheet had a thickness of 9 *µ* m, its surface had insulation, and no separation of graphite powder was observed.

For the evaluation of thermal conductivity of the thus made resin coated graphite sheet, a bare graphite sheet and the resin coated graphite sheet were each sandwiched between a heat source and a heat sink, and a temperature difference between the heat source and the heat sink was measured in each case in the same manner as in Example 5.

As a result of the measurement, in the case of the bare graphite sheet, the temperature difference between the heat source and the heat sink was 4.8°C, while in the case of the resin coated graphite sheet, the temperature difference was 6.0°C, a minuscule increase of 1.2°C over the bare graphite sheet. Accordingly, a property of the resin coated graphite sheet as a heat transfer material is substantially indistinguishable from that of the bare graphite sheet.

### Example 9

Polyimide varnish (marketed under the trade name of TORAYNEESE #3000 by Toray Industries, Inc.) was diluted with diethyl acetamide in a ratio of 1:10 and was applied to opposite sides of a graphite sheet obtained in the same manner as in Example 1 by spraying. Subsequently, the graphite sheet coated with the diluted polyimide varnish underwent a heat treatment at 120°C and 220°C for 10 minutes each and further underwent the spraying followed by a heat treatment at 120°C, 220°C and 300°C for 10 minutes, 10 minutes and 30 minutes, respectively. The polyimide resin film thus formed on the graphite sheet had a thickness of 6 *µ* m, its surface exhibited insulation, and no separation of graphite powder was observed.

For the evaluation of thermal conductivity of the thus made resin coated graphite sheet, a bare graphite sheet and the resin coated graphite sheet were each sandwiched between a heat source and a heat sink, and a temperature difference between the heat source and the heat sink was measured in each case in the same manner as in Example 5.

As a result of the measurement, in the case of the bare graphite sheet, the temperature difference between the heat source and the heat sink was 4.8°C, while in the case of the resin coated graphite sheet, the temperature difference was 5.6°C, a minuscule increase of 0.8°C over the bare graphite sheet. Accordingly, a property of the resin coated graphite sheet as a heat transfer material is substantially indistinguishable from that of the bare graphite sheet.

### Example 10

Polyimide varnish (marketed under the trade name of SEMICOFINE SP-110 by Toray Industries, Inc.) was applied to opposite sides of a graphite sheet obtained in the same manner as in Example 1 by screen printing, and subsequently, the graphite sheet coated with the polyimide varnish underwent a heat treatment at 80°C, 150°C, 200°C and 350°C for 30 minutes each. The polyimide resin film thus formed on the graphite sheet had a thickness of 8 *µ* m, its surface had insulation, and no separation of graphite powder was observed.

For the evaluation of thermal conductivity of the thus made resin coated graphite sheet, a bare graphite sheet and the resin coated graphite sheet were each sandwiched between a heat source and a heat sink, and a temperature difference between the heat source and the heat sink was measured in each case in the same manner as in Example 5.

As a result of the measurement, in the case of the bare graphite sheet, the temperature difference between the heat source and the heat sink was 4.8°C, while in the case of the resin coated graphite sheet, the temperature difference was 5.5°C, a minuscule increase of 0.7°C over the bare graphite sheet. Accordingly, a property of the resin coated graphite sheet as a heat transfer material is substantially indistinguishable from that of the bare graphite sheet.

### Example 11

Fluororesin (marketed under the trade name of CYTOP CTX-809 by Asahi Glass Company) was applied to opposite sides of a graphite sheet obtained in the same manner as in Example 1 by brushing, and subsequently, the graphite sheet coated with the fluororesin underwent curing at 50°C and 180°C for 1 hour each. The fluororesin film thus formed on the graphite sheet had a thickness of 10 *µ* m, its surface exhibited insulation, and no separation of graphite powder was observed. The fluororesin film also features excellent chemical resistance.

For the evaluation of thermal conductivity of the thus made resin coated graphite sheet, a bare graphite sheet and the resin coated graphite sheet were each sandwiched between a heat source and a heat sink, and a temperature difference between the heat source and the heat sink was measured in each case in the same manner as in Example 5.

As a result of the measurement, in the case of the bare graphite sheet, the temperature difference between the heat source and the heat sink was 4.8°C, while in the case of the resin coated graphite sheet, the temperature difference was 6.2°C, a minuscule increase of 1.4°C over the bare graphite sheet. Accordingly, a property of the resin coated graphite sheet as a heat transfer material is substantially indistinguishable from that of the bare graphite sheet.

### Example 12

Graphite sheets obtained in the same manner as in Example 4 were respectively coated with resin films respectively formed in the same manners as in Examples 5-11, and all of these graphite sheets exhibited satisfactory properties similar to those in Examples 5-11.

Graphite sheets which were made in the same manner as described above except that the maximum temperature for the preliminary heat treatment was set at 1400°C and were respectively coated with resin films respectively formed in the same manners as in Examples 5-11 underwent the same tests as in Examples 5-11 and showed the similar results.

In each of the Examples 5-12, with a resin film exceeding 10 *µ* m in thickness, the resin film causes increased thermal resistance, thus impairing thermal conductivity of a graphite sheet, and flexibility of the sheet also decreases. It is therefore preferable that a resin film is as thin as 10 *µ* m or less.

In Examples 5-12, epoxy resin, polyimide resin, fluororesin and the like were used singly to each form a resin film. However, the resin film can also be a laminated film of two or more of these resins. The resin film having such a laminated structure not only is capable of exhibiting insulation on the surface of a graphite sheet, improving mechanical strength and preventing the separation of graphite powder, but also can exhibit heat resistance, chemical resistance and flexibility.

As described above, through the formation of a resin film on the surface of a bare graphite sheet, there can be obtained a good-quality resin coated graphite sheet which has excellent electric insulation and excellent flexibility and a low thermal resistance and prevents the separation of graphite powder without impairing excellent thermal conductivity of the bare graphite sheet.

Moreover, adhesion between the coating film and the graphite sheet is satisfactory, so that the use of an adhesive or the like is unnecessary; this facilitates the work.

## Claims

1. A graphite sheet comprising:
a bare graphite sheet; and
an electrodeposited film of organic polymer formed on a surface of the bare graphite sheet.

2. The graphite sheet of claim 1, wherein the electrodeposited film is formed by electrodeposition from a resin selected from the group consisting of an anionic electrodeposition resin, a cationic electrodeposition resin, a thermosetting electrodeposition resin and a UV curing electrodeposition resin.

3. The graphite sheet of claim 1, wherein the electrodeposited film is polyimide.

4. The graphite sheet of claim 1, wherein the electrodeposited film has a thickness equal to or less than 10 *µ* m.

5. The graphite sheet of claim 1, wherein the bare graphite sheet is made by preliminarily heating a polyimide film in an inert gas atmosphere at a temperature in the range of 1000°C to 1600°C and subsequently heating the polyimide film from room temperature to a temperature equal to or greater than 2500°C.

6. A graphite sheet comprising:
a bare graphite sheet; and
a resin film formed on one of one side and opposite sides of the bare graphite sheet.

7. The graphite sheet of claim 6, wherein the resin film includes at least one resin selected from the group consisting of an epoxy resin, a polyimide resin and a fluororesin.

8. The graphite sheet of claim 6, wherein the resin film has a thickness equal to or less than 10 *µ* m.

9. The graphite sheet of claim 6, wherein the bare graphite sheet is made by preliminarily heating a polyimide film in an inert gas atmosphere at a temperature in the range of 1000°C to 1600°C and subsequently heating the polyimide film from room temperature to a temperature equal to or greater than 2500°C.

10. A method of coating a bare graphite sheet, comprising the step of:
forming an organic polymer film on a surface of the bare graphite sheet by electrodeposition.

11. The method of claim 10, wherein the organic polymer film is formed by electrodeposition from a resin selected from the group consisting of an anionic electrodeposition resin, a cationic electrodeposition resin, a thermosetting electrodeposition resin and a UV curing electrodeposition resin.

12. The method of claim 10, wherein the organic polymer film is polyimide.

13. The method of claim 10, wherein the organic polymer film has a thickness equal to or less than 10 *µ* m.

14. The method of claim 10, wherein the bare graphite sheet is made by preliminarily heating a polyimide film in an inert gas atmosphere at a temperature in the range of 1000°C to 1600°C and subsequently heating the polyimide film from room temperature to a temperature equal to or greater than 2500°C.

15. A method of coating a bare graphite sheet, comprising the step of:
applying a resin in solution form to one of one side and opposite sides of the bare graphite sheet to form either a resin film or resin films.

16. The method of claim 15, wherein either the resin film or the resin films include at least one resin selected from the group consisting of an epoxy resin, a polyimide resin and a fluororesin.

17. The method of claim 15, wherein the applying step is carried out by one selected from the group consisting of dipping, spin coating, screen printing, brushing and spraying.

18. The method of claim 15, wherein the bare graphite sheet is made by preliminarily heating a polyimide film in an inert gas atmosphere at a temperature in the range of 1000°C to 1600°C and subsequently heating the polyimide film from room temperature to a temperature equal to or greater than 2500°C.
